# FASCICULE DE BREVET EUROPEEN

(11) **EP 3 375 542 B1**
(45) Date de publication et mention de la délivrance du brevet: **07.08.2019**
(21) Numéro de dépôt: 18161640.0
(22) Date de dépôt: 14.03.2018
(51) Int. Cl.: B21J 15/02, B21J 15/04, B21J 15/08, B21J 15/14, B23K 20/12, F16B 19/10, F16B 37/06, B21J 5/06

(54) **PROCÉDÉ D'ASSEMBLAGE D'UN INSERT SUR UN SUPPORT**
MONTAGEVERFAHREN EINES EINSATZES AUF EINE HALTERUNG
METHOD FOR ASSEMBLING AN INSERT ON A SUPPORT

(30) Priorité: 16.03.2017 FR 1752146
(43) Date de publication de la demande: 19.09.2018
(73) Titulaire: Bollhoff Otalu S.A., 73490 La Ravoire (FR); Unimex NV, 35000 Hasselt (BE)
(72) Inventeur: MATTLER, Claude, 73000 Barberaz (FR); DJELIDI, Stéphane, 73000 Chambéry (FR); FRISON, Jean-Louis, 73220 Randens (FR); LEJARS, Patrick, 38530 Barraux (FR); VAN DER STEEN, Arne, 3590 Diepenbeek (BE)
(74) Mandataire: Talbot, Alexandre

(56) Documents cités:
- WO-A1-2017/005722
- DE-A1-102007 058 393
- FR-A1- 3 017 316

## Description

### Domaine technique de l'invention

L'invention est relative à l'assemblage d'un insert sur un support.

### État de la technique

Actuellement, il est difficile d'assembler des inserts sur des supports à paroi mince, c'est-à-dire des supports qui ont une épaisseur faible inférieure à 2 mm. Ces supports peuvent être des tôles fines, des tubes ou des profilés fins, et il est difficile d'assembler des inserts dont le rôle est de relier différentes pièces entre elles sur ces supports.

On peut assembler un insert sur un support par soudure, à l'arc ou par flamme, avec apport d'un métal pour lier l'insert au support, c'est-à-dire une soudure sans friction. Mais dans ce cas, le support doit posséder une épaisseur de paroi suffisante pour, ni se déformer, ni se percer, sous l'action de la chaleur apportée lors de l'opération de soudure.

Par exemple, on peut percer par enlèvement de matière, un trou dans un support, puis souder un insert en surface du support. Ce perçage est effectué au moyen d'un foret ou d'une mèche, et pour des matériaux très durs on utilise en général l'électroérosion, les ultrasons ou le laser. Mais un tel perçage est destiné aux matériaux épais et très résistants car l'enlèvement de matière généré peut affaiblir la résistance d'un support à paroi mince.

On peut également effectuer un perçage par friction à chaud qui consiste à former un orifice dans un support à l'aide d'une broche ayant une tête conique. La broche est mise en rotation autour d'un axe de rotation et on exerce une pression axiale de la tête conique contre le support selon l'axe de rotation, de manière à former, à partir de la matière du support percée, un manchon autour de l'orifice. On note également le perçage par friction à chaud, un perçage sans enlèvement de matière. On peut ensuite tarauder l'intérieur du manchon pour former un écrou directement dans le support. L'étape de taraudage est effectuée par refoulement de matière ou déformation à froid des parois du manchon. Mais le manchon réalisé lors du perçage par friction à chaud présente une épaisseur faible facilement déformable et insuffisamment épaisse, ce qui rend le manchon incompatible avec la résistance attendue pour une zone filetée. En effet, l'épaisseur du manchon est faible car il provient d'une faible quantité de matière déplacée issue du support ayant une épaisseur faible. En outre, l'étape de taraudage ne peut pas être réalisée sur des supports à paroi mince car elle peut déformer le support. Par ailleurs, la hauteur du tronçon taraudé dépend de la hauteur du manchon formé et il est donc difficile de réaliser des inserts ayants des formes et des tronçons filetés variés sur un même support. En particulier, le manchon formé autour de l'orifice ne permet pas de former une entretoise.

On peut également citer le brevet français FR 3 017 316 qui divulgue un procédé dans lequel on réalise un orifice dans le support par un perçage par friction à chaud à l'aide d'une broche à tête conique, puis on monte un insert sur un appareil de pose et on met en rotation l'appareil de pose tout en introduisant l'insert dans l'orifice. En outre, on soude l'insert au support par une friction engendrée par la rotation et par une mise en pression de l'insert contre le support jusqu'à fusion du support. Lors d'une dernière étape, on arrête la rotation de l'appareil de pose et on retire l'appareil de pose de l'insert. Mais cette soudure ne garantit pas une étanchéité entre l'insert et le support. Par ailleurs, la friction du support engendre un échauffement qui modifie la polarité de la surface du support et attire les atomes d'oxygène, ce qui favorise l'oxydation et la corrosion de la zone soudée.

### Objet de l'invention

L'objet de l'invention consiste à fournir des moyens d'assemblage d'un insert sur un support qui permette de pallier les inconvénients précités, et en particulier fournir un procédé pour assembler des inserts qui est rapide à mettre en oeuvre et qui offre une meilleure étanchéité entre l'insert et le support tout en maintenant une tenue mécanique efficace de l'insert avec le support.

Un autre objet de l'invention consiste à fournir un insert particulièrement adapté pour fournir une tenue mécanique efficace de l'insert avec le support.

Un autre objet de l'invention consiste à limiter la corrosion de l'insert et du support une fois assemblés.

Selon un aspect de l'invention, il est proposé un procédé d'assemblage d'un insert sur un support, comprenant :
- une étape de préparation dans laquelle on place un joint métallique entre l'insert et le support, et
- une étape de soudure dans laquelle on anime une broche en rotation autour d'un axe de rotation et on place la broche en contact avec l'insert de manière que la broche génère des forces de frottement sur l'insert pour liquéfier le joint métallique et souder l'insert au support.

Ainsi on fournit une étanchéité entre l'insert et le support tout en garantissant une tenue mécanique suffisante entre l'insert et le support.

L'étape de soudure peut comporter une translation de la broche selon l'axe de rotation pour exercer une pression sur l'insert et sur le joint métallique.

Lors de l'étape de soudure, l'insert peut être bloqué en rotation.

Selon un mode de mise en oeuvre, l'insert comprend un premier tronçon, un deuxième tronçon adjacent au premier tronçon et un épaulement situé entre les premier et deuxième tronçons, et, lors de l'étape de préparation, on forme un orifice au sein du support puis on introduit le deuxième tronçon au sein de l'orifice en plaçant le joint métallique entre l'épaulement et le support.

Les premier et deuxième tronçons peuvent être creux, le deuxième tronçon comporte une surface interne tronconique s'évasant en direction du premier tronçon et, lors de l'étape de soudure, la broche est placée en contact avec la surface interne du deuxième tronçon.

Après l'étape de soudure, le procédé peut comprendre une étape de sertissage de l'insert sur le support dans laquelle on translate la broche selon l'axe de rotation pour écarter le deuxième tronçon radialement par rapport à l'axe de rotation.

Lors de l'étape de préparation, le joint métallique peut être monté autour de l'insert.

On peut former l'orifice au sein du support à l'aide d'une broche de perçage comportant un corps muni de deux épaulements reliés entre eux par une surface ayant au moins une partie plane.

Selon un autre mode de mise en oeuvre, l'insert est borgne et comprend un tronçon et une base adjacente au tronçon et, lors de l'étape de préparation, on place le joint métallique entre la base et le support.

Lors de l'étape de soudure, on peut percer par friction à chaud un premier orifice au sein de la base et un deuxième orifice au sein du support en translatant la broche selon l'axe de rotation de manière à former, à partir de la matière de l'insert et du support, un manchon autour du deuxième orifice.

Un tel procédé est particulièrement adapté pour des supports n'ayant pas d'orifice pour loger l'insert. En outre, on fournit un procédé rapide à mettre en oeuvre car il utilise une même broche pour percer et souder. On peut donc s'affranchir d'utiliser deux broches distinctes, une broche pour percer l'orifice et une autre broche pour souder l'insert, ce qui améliore la maîtrise du procédé.

La broche peut comporter un épaulement et, après l'étape de soudure, le procédé comporte une étape de déformation du manchon en translatant la broche selon l'axe de rotation de manière que l'épaulement de la broche exerce une pression sur le manchon.

L'insert peut être une entretoise ou un écrou.

L'insert et le support peuvent être en métal.

Le support peut comporter au moins un matériau polymère.

Selon un autre aspect de l'invention, il est proposé un insert à assembler sur un support, comprenant un premier tronçon creux, un deuxième tronçon de sertissage creux adjacent au premier tronçon et destiné à être déformé lors d'une opération de sertissage de l'insert sur le support, et un épaulement situé entre les premier et deuxième tronçons.

Le deuxième tronçon comporte une surface interne tronconique s'évasant en direction du premier tronçon.

### Description sommaire des dessins

D'autres avantages et caractéristiques de l'invention apparaîtront à l'examen de la description détaillée de modes de réalisation et de mise en oeuvre, nullement limitatifs, et des dessins annexés sur lesquels :
- les figures 1 à 4, illustrent schématiquement une vue en coupe des principales étapes d'un mode de mise en oeuvre d'un procédé d'assemblage d'un insert sur un support ;
- les figures 5 à 8, illustrent schématiquement une vue en coupe des principales étapes d'un autre mode de mise en oeuvre du procédé d'assemblage ;
- les figures 9 à 12, illustrent schématiquement des vues en coupe des principales étapes d'un mode de mise en oeuvre d'une formation d'un orifice au sein d'un support ;
- la figure 13, illustre schématiquement une vue de dessus en perspective d'un mode de réalisation d'une broche ;
- la figure 14, illustre schématiquement une vue de côté en perspective de la broche illustrée à la figure 13 ;
- la figure 15, illustre schématiquement une vue en perspective d'un autre mode de réalisation d'une broche ;
- la figure 16, illustre schématiquement une vue de côté de la broche illustrée à la figure 15 ;
- la figure 17, illustre schématiquement une vue de dessus de la broche illustrée à la figure 15 ; et
- les figures 18 à 21, illustrent schématiquement des vues en coupe des principales étapes d'un autre mode de mise en oeuvre d'une formation d'un orifice au sein d'un support.

### Description détaillée

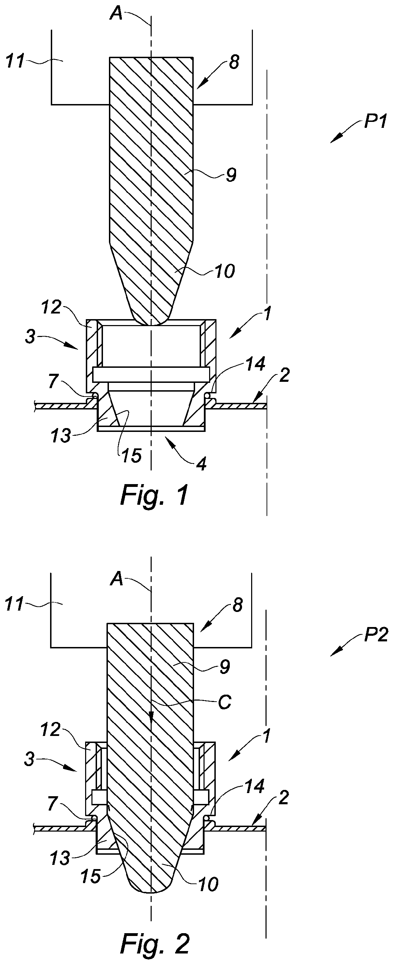

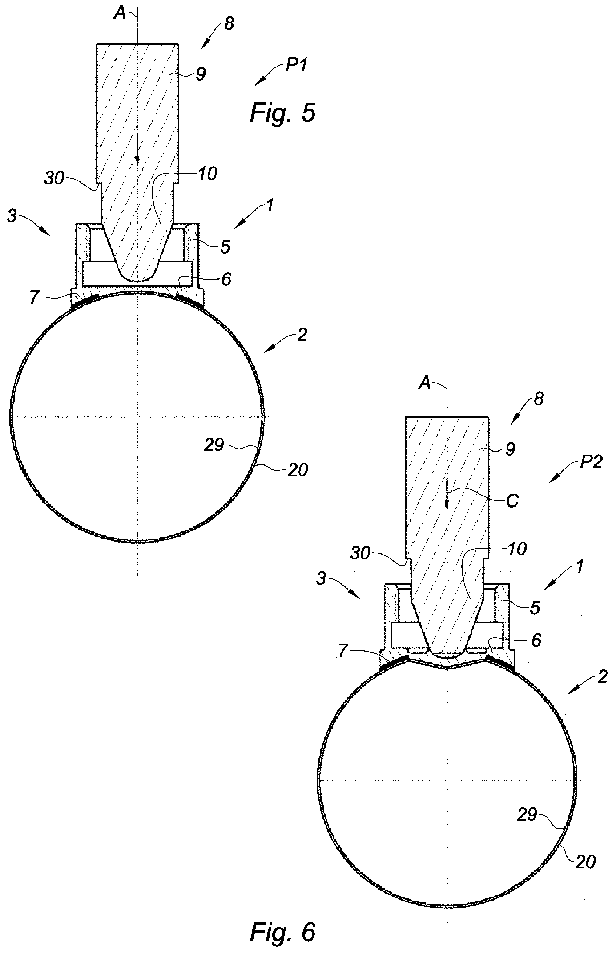

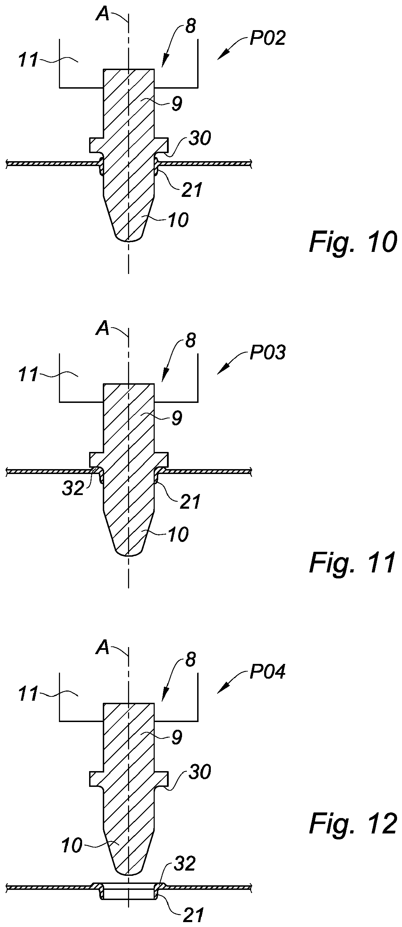

Sur les figures 1 à 12, on a représenté les principales étapes d'un procédé d'assemblage d'un insert 1 sur un support 2. L'insert 1 peut être un écrou ou une entretoise. Un écrou est une pièce creuse taraudée, c'est-à-dire qui comporte un filetage interne, destinée à être fixée à une autre pièce filetée. Une entretoise est une pièce de liaison destinée à être placée transversalement entre le support 2 et une pièce secondaire. Une entretoise permet, notamment, de maintenir un écartement constant entre le support 2 et la pièce secondaire. L'entretoise peut également comporter un tronçon muni d'un filetage interne. L'insert 1 a un corps 3 qui peut délimiter un trou traversant 4, comme illustré aux figures 1 à 4. L'insert 1 peut être borgne, comme illustré aux figures 5 à 8, c'est-à-dire que son corps 3 comporte un tronçon 5 et une base 6 adjacente au tronçon 5.

Le procédé d'assemblage comporte une étape de préparation P1 et une étape de soudure P2. De manière optionnelle, le procédé peut en outre comprendre une étape de sertissage P3. Le procédé peut également comprendre une étape de déformation P4.

Lors de l'étape de préparation P1, on place un joint métallique 7 entre l'insert 1 et le support 2, comme illustré aux figures 1 et 5. Le joint métallique 7 comporte un ou plusieurs métaux. Par exemple, le joint 7 comporte de l'argent, du cuivre, du zinc et/ou de l'étain dont les proportions varient selon la nature de l'insert 1, du support 2, et de la destination fonctionnelle de l'insert 1. Le joint métallique 7 peut être sous forme de pâte malléable, ou d'un ensemble de feuilles superposées, ou sous forme solide monobloc.

Lors de l'étape de soudure P2, on utilise une broche 8. La broche 8 comprend un corps cylindrique 9 muni à une extrémité d'une tête conique 10. On entend ici par cylindre, un solide limité par une surface cylindrique engendrée par une droite, notée génératrice, parcourant une courbe plane fermée, notée directrice, et deux plans coupant les génératrices. De préférence, la tête conique 10 est réalisée à l'aide d'un matériau résistant à la chaleur, tel que certains aciers, la céramique, ou un matériau en carbure. La broche 8 est montée à rotation sur un appareil 11. L'appareil 11 est configuré pour animer la broche 8 en rotation autour d'un axe de rotation A, et pour translater la broche 8 selon l'axe de rotation A. L'axe de rotation A correspond à un axe longitudinal du corps cylindrique 9 de la broche 8.

Plus particulièrement, on anime la broche 8 en rotation autour de l'axe de rotation A, puis on place la broche 8 en contact avec l'insert 1, comme illustré aux figures 2, 6 et 7. Par exemple, l'insert 1 peut avoir un corps 3 creux cylindrique et le diamètre externe du corps 9 de la broche 8 peut être supérieur au diamètre interne du corps 3 de l'insert 1. La mise en contact et l'animation en rotation génèrent des forces de frottement sur l'insert 1, ce qui liquéfie le joint métallique 7 et soude l'insert 1 au support 2. C'est-à-dire que la mise en contact et la rotation de la broche 8 génèrent un échauffement rapide de l'insert 1, du joint métallique 7, et du support 2 par diffusion au travers de la paroi du corps 3 de l'insert 1 et de la paroi du support 2. Préférentiellement, on translate la broche 8 selon l'axe de rotation A en direction du support 2, indiquée sur la figure 2 par la référence C, pour la mettre en contact avec l'insert 1. Les forces de frottement entraînent une augmentation de la température de l'insert 1, du joint métallique 7 et du support 2. Lorsque la température du joint métallique 7 atteint la température de fusion de l'un de ses composants, le joint métallique 7 se liquéfie, en totalité ou en partie selon les différentes températures de fusion de ses composants. La liquéfaction du joint métallique 7 entraine la soudure de l'insert 1 au support 2. Avantageusement, les forces de frottement sont entretenues en translatant la broche 8 selon l'axe de rotation A et en direction du support 2 pour exercer une pression sur l'insert 1 et sur le joint métallique 7, ce qui facilite la liquéfaction du joint métallique 7. En d'autres termes la pression de la broche 8 sur l'insert 1 favorise le transfert de calories de l'insert 1 au joint métallique 7 et au support 2, pour augmenter la température du joint métallique 7 afin d'effectuer la soudure de l'insert 1 au support 2. On dit aussi que le joint métallique 7 a une propriété de liquation adaptée aux éléments à souder, à savoir l'insert 1 et le support 2. La liquation est une opération qui consiste à séparer par fusion deux ou plusieurs métaux de fusibilités différentes, c'est-à-dire des métaux ayant des températures de fusion différentes. En d'autres termes, la liquation consiste en une séparation d'un ou plusieurs métaux de ses alliages par chauffage à une température telle que le ou les métaux fondus puissent se séparer des autres alliages restés solides. Par ailleurs, afin d'éviter la corrosion, du nickel peut être ajouté lorsque l'insert 1 et le support 2 sont réalisés à partir d'aciers inoxydables. En variante, le joint métallique 7 peut comprendre du tétra borate de potassium dont le but est la création d'une bulle de gaz inerte. Le gaz inerte isole les métaux liquéfiés de l'air ambiant pour éviter les oxydations futures. Avantageusement, le joint métallique 7 est dépourvu de cadmium pour des raisons de protection de l'environnement. De préférence, lors de la soudure P2, on translate la broche 8 selon l'axe de rotation A tout en animant la broche 8 en rotation autour de l'axe A de façon à maintenir une friction sur l'insert 1 et empêcher le refroidissement du joint métallique 7.

L'insert 1 et le support 2 peuvent être en métal. Le support 2 peut comporter au moins un matériau polymère. On entend par matériau polymère, un solide qui comprend un polymère naturel, tels que des constituants des végétaux, par exemple la cellulose ou le caoutchouc naturel, et/ou qui comprend un polymère synthétique, par exemple le polyéthylène ou les polyoléfines.

Avantageusement, lors de l'étape de soudure P2, l'insert 1 peut être maintenu en position par un élément extérieur qui bloque l'insert 1 en rotation. L'insert 1 peut comporter une forme anti-rotation, par exemple une section dont la surface externe est polygonale, qui collabore avec une forme complémentaire de l'élément extérieur. Ainsi, on favorise la génération des forces de frottement et on accélère la montée en température de l'insert 1 et du joint métallique 7. Avantageusement, l'insert 1 est libre en translation selon l'axe de rotation A. Par ailleurs, le support 2 est également immobilisé pendant les étapes du procédé d'assemblage.

Sur les figures 1 à 4, on a représenté un premier mode de mise en oeuvre du procédé d'assemblage de l'insert 1 sur le support 2. L'insert 1 comporte un premier tronçon 12, un deuxième tronçon 13 adjacent au premier tronçon 11 et un épaulement 14 situé entre les premier et deuxième tronçons 12, 13. On entend par épaulement, une surface normale à un axe longitudinal d'un corps résultant d'une variation de diamètre du corps. De préférence, les premier et deuxième tronçons 12, 13 sont creux de manière à permettre une introduction de la broche 8 dans le corps 3 de l'insert 1 pour mettre en contact la broche 8 avec une surface interne 15 du corps 3 de l'insert 1, en particulier la surface interne 15 du deuxième tronçon 12.

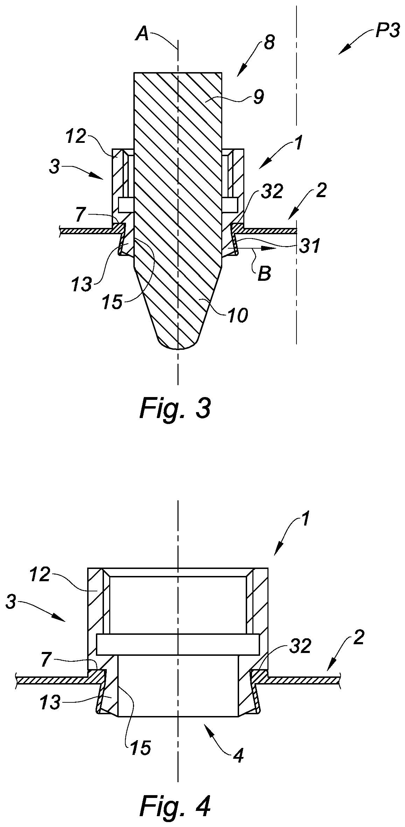

Par ailleurs, un orifice est formé au sein du support 2. De préférence, le support 2 comporte une zone aplatie 32 entourant l'orifice, comme illustré sur la figure 3.

Lors de l'étape de préparation P1, illustrée à la figure 1, on place le joint métallique 7 entre l'épaulement 14 et le support 2. Par exemple, le joint métallique 7 est monté autour de l'insert 1. Le joint 7 peut avoir une forme annulaire et on monte le joint 7 par emboitement avec le corps 3 de l'insert 1. Puis on introduit le deuxième tronçon 13 au sein de l'orifice du support 2. Ainsi, le joint métallique 7 est en contact avec l'épaulement 14 de l'insert 1 et le support 2. En d'autres termes l'insert 1 est en appui sur le joint métallique 7, ce dernier étant en appui sur le support 2.

Puis, comme illustré sur la figure 2, on anime la broche 8 en rotation autour de l'axe de rotation A, et on translate la broche 8 selon l'axe de rotation A. La tête conique 10 vient en contact de l'insert 1, plus particulièrement au contact de la surface interne 15 de l'insert 1. La rotation de la broche 8 génère des forces de frottement qui augmentent la température de l'insert 1, du joint métallique 7 et du support 2. C'est-à-dire que la montée en température se fait dans les zones qui sont en contact entre elles. L'augmentation de la température entraîne la liquéfaction du joint métallique 7 et la soudure de l'insert 1 au support 2.

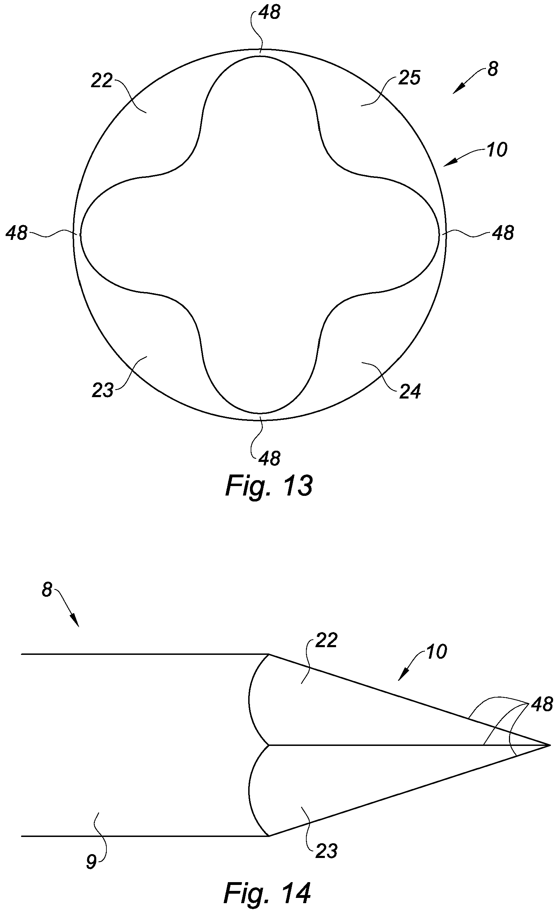

Comme illustré sur les figures 13 et 14, la tête conique 10 peut comporter plusieurs lobes 22 à 25, par exemple quatre lobes 22 à 25, séparés par des génératrices 48, ou arêtes 48. Les lobes 22 à 25 forment des surfaces incurvées creusées au sein de la tête 10. Les génératrices 48 augmentent le coefficient de frottement entre la broche 8 et l'insert 1. La montée en température du joint métallique 7 est alors plus rapide.

Pour encore améliorer la génération des forces de frottement, la surface interne 15 du deuxième tronçon 13 de l'insert 1 est tronconique et s'évase en direction du premier tronçon 12. Ainsi, lors de l'étape de soudure P2, la surface interne 15 de l'insert 1 coopère avec la tête tronconique 10 de la broche 8. En outre, la pente des génératrices 48 peut être différente de celle de la surface interne 15 du deuxième tronçon 13. Dans ce cas, la friction entre la broche 8 et l'insert 1 s'effectue en un point de contact de chacune des génératrices 48. La surface de contact entre la broche 8 et l'insert 1 augmente progressivement par la translation de la broche 8 selon l'axe de rotation A. La montée rapide en température par l'augmentation des frottements permet de limiter la vitesse de rotation de la broche 8 et diminuer les temps de friction. On diminue alors les usures de la broche 8 et celles des inserts 1.

Avantageusement, on peut contrôler l'augmentation de température par un système de capteurs à infrarouge. Une information de la valeur de la température de l'insert 1 commande une position de la broche 8 par rapport à l'insert 1. Ainsi, en translatant la broche 8 en direction du support 2, on augmente la pression de la broche 8 sur l'insert 1 et on augmente la température de l'insert 1, du joint métallique 7 et du support 2. Inversement, un éloignement de la broche 8 par rapport au support 2 entraîne un refroidissement. On peut contrôler la température du joint métallique 7 en contrôlant la position de la broche 8 par rapport à l'insert 1.

Plus particulièrement, lorsque la température de fusion du joint métallique 7 est atteinte, on exerce une pression sur l'insert 1 orientée selon l'axe de rotation A et en direction du support 2, pour favoriser la soudure. La pression exercée sur l'insert 1 est reportée sur le joint métallique 7 qui est liquéfié en partie ou complètement, selon les différents points de fusion des métaux qui le compose. La pression de l'insert 1 sur le joint 7 génère un déplacement de la partie du joint liquéfiée vers le corps 3 de l'insert 1. Une infiltration du joint liquéfié 7 dans les espaces situés entre le corps 3 de l'insert 1 et le support 2 procure une étanchéité efficace. Ainsi, le joint métallique 7 génère un anneau d'étanchéité et de liaison. Pendant l'étape de soudure P2, on continue d'animer en rotation et en translation la broche 8 pour entretenir l'apport de calories procuré par la friction jusqu'à la fusion des matériaux du joint métallique 7. Ce mode de mise en oeuvre est particulièrement adapté lorsque l'insert 1 et le support 2 sont réalisés avec le même matériau, et plus particulièrement lorsqu'ils sont en métal.

Par ailleurs, la soudure est améliorée car elle est effectuée lorsque le support 2, le joint métallique 7 et l'insert 1 sont en homogénéité de température.

Pour améliorer la tenue mécanique de l'insert 1 au support 2, le procédé peut en outre comprendre, après l'étape de soudure P2, l'étape de sertissage P3. L'étape de sertissage P3 comporte une prolongation de la translation de la broche 8 selon l'axe de rotation A pour écarter le deuxième tronçon 13 radialement par rapport à l'axe de rotation A. L'écartement radial comporte un éloignement du deuxième tronçon 13 par rapport à l'axe de rotation A. Comme illustré sur la figure 3, le deuxième tronçon 13 translate selon un axe radial B perpendiculaire à l'axe de rotation A. Lors du sertissage, la surface interne 15 préalablement conique est modifiée en une surface interne cylindrique. Le sertissage crée une zone d'accroche mécanique entre l'insert 1 et le support 2. Cette accroche prend la forme d'un cône dont la base possède un diamètre externe supérieur au diamètre de l'orifice du support 2 et empêche l'insert 1 d'être arraché du support 2.

La combinaison de la soudure et du sertissage réalise une liaison résistante aux couples en torsion, à l'arrachement selon l'axe de rotation A, et à la flexion, tout en étant étanche.

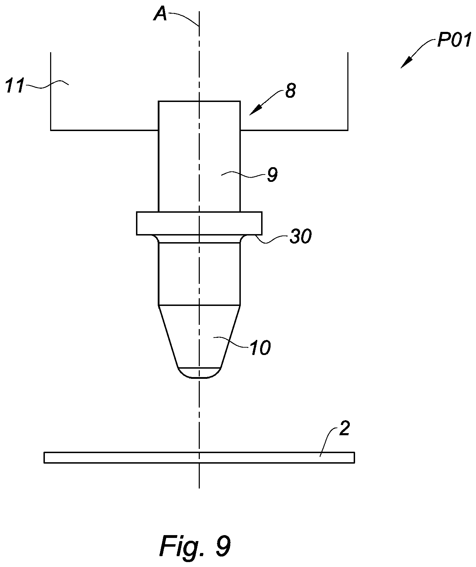

La tenue mécanique de l'insert 1 peut également être améliorée en utilisant un support 2 dont l'orifice a été réalisé par friction à chaud, comme décrit ultérieurement et comme illustré aux figures 9 à 12. Dans ce cas, un manchon 21 est réalisé autour de l'orifice du support 2. Lorsque l'insert 1 est introduit dans l'orifice, le deuxième tronçon 13 est en contact avec le manchon 21. Par ailleurs, lors de l'étape de sertissage P3, l'écartement du deuxième tronçon 13 entraîne un écartement du manchon 21, selon la direction B. On réalisera un manchon 21 suffisamment souple pour qu'il puisse se déformer. Ainsi, après le sertissage P3, le manchon 21 déplacé offre un verrouillage mécanique de l'insert 1 sur le support 2.

Puis on retire la broche 8 de l'insert 1, par un mouvement de translation opposé à celui utilisé lors de l'étape de soudure P2, et on obtient l'insert 1 soudé au support 2, comme illustré sur la figure 4. Le refroidissement de l'ensemble s'engage après l'arrêt de la rotation de la broche 8, car l'insert 1 n'est plus soumis aux frictions. Le refroidissement peut être accéléré par un système de refroidissement en air forcé optionnel.

Sur les figures 5 à 8, on a représenté un deuxième mode de mise en oeuvre du procédé d'assemblage de l'insert 1 sur le support 2. L'insert 1 comporte le tronçon 5 et la base 6 qui ferme une extrémité de l'insert 1. De préférence, le tronçon 5 est creux de manière à permettre une introduction de la broche 8 dans le corps 3 de l'insert 1 et une mise en contact de la broche 8 avec la base 6 de l'insert 1. En outre, le support 2 comporte une surface externe 20 ayant une forme quelconque. Par exemple la surface externe 20 est incurvée et le support 2 peut être un tube creux, ou la surface externe 20 est plane et le support 2 peut être une tôle ou une barre creuse. La surface de la base 6 de l'insert 1 a préférentiellement une forme complémentaire à la surface externe 20, de manière à épouser la forme du support 2. Lors de l'étape de préparation P1, illustrée à la figure 5, on place le joint métallique 7 entre la base 6 et le support 2, en plaçant l'insert 1 sur le support 2. Ainsi, le joint métallique 7 est en contact avec la base 6 de l'insert 1 et le support 2.

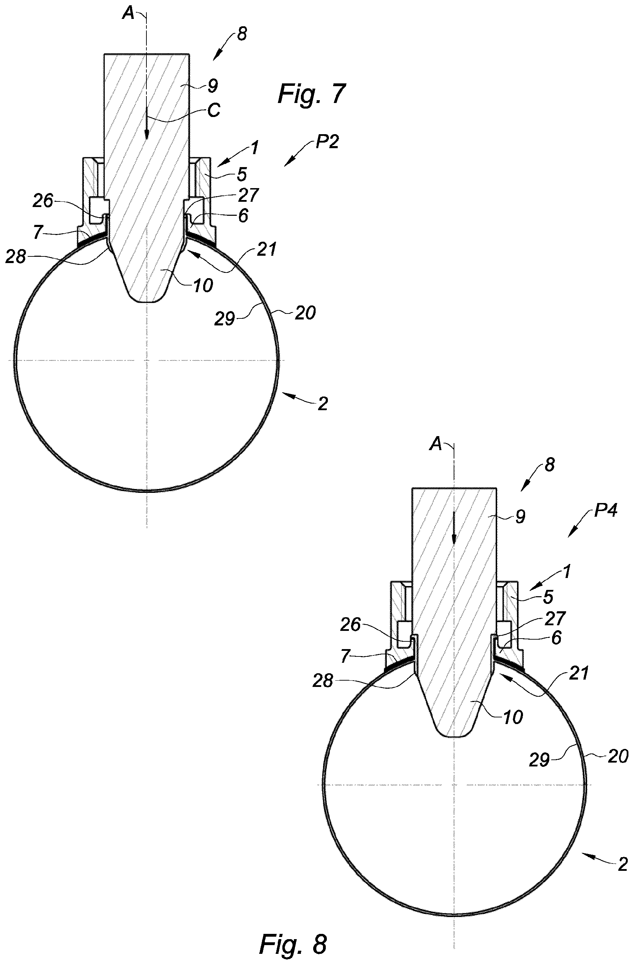

Lors de l'étape de soudure P2, illustrée aux figures 6 et 7, on perce par friction à chaud un premier orifice au sein de la base 6 puis un deuxième orifice au sein du support 2, c'est-à-dire qu'on perce sans enlèvement de matière. A la différence d'un perçage par enlèvement de matière, le perçage par friction à chaud permet de former, à partir de la matière du support 2 percé, un manchon 21 autour du deuxième orifice. En d'autres termes, la base 6 et le support 2 sont percés simultanément par friction à chaud. Le perçage par friction à chaud est obtenu en mettant en rotation la broche 8 autour de l'axe de rotation A et en translatant la broche 8 selon l'axe de rotation A pour exercer une pression axiale de la tête conique 10 contre la base 6 puis contre le support 2. En particulier, la translation de la broche 8 est effectuée simultanément à sa mise en rotation selon le même axe de rotation A. La translation de la broche 8 est effectuée en direction du support 2, indiquée sur la figure 7 par la référence C. La pression axiale est effectuée le long de l'axe de rotation A contre la base 6 et contre le support 2. L'appareil 11 est en outre configuré pour déplacer la broche 8 en translation selon l'axe de rotation A tout en animant en rotation la broche 8 autour de l'axe de rotation A. En d'autres termes, le contact entre la tête conique 10 et la base 6 engendre une friction sur la base 6 qui produit de la chaleur localement. La chaleur adoucit la base 6 et la broche 8 traverse l'insert 1, formant le premier orifice souhaité. Puis, on fait progresser la broche 8 en translation selon l'axe de rotation A et la tête conique 10 vient en contact du support 2, engendre une friction sur le support 2 qui produit de la chaleur localement. La chaleur adoucit le support 2 et la broche 8 traverse le support 2, formant le deuxième orifice souhaité.

Le perçage par fiction à chaud est particulièrement adapté à des supports 2 à paroi mince puisque la matière chauffée doit pouvoir s'écouler pour former le manchon 21. De préférence, le support 2 a une paroi mince, c'est-à-dire une paroi dont l'épaisseur est inférieure ou égale au rayon du deuxième orifice réalisé dans le support 2. Une telle paroi mince n'est ni adaptée pour effectuer un taraudage, ni adaptée pour effectuer un trou par perçage par enlèvement de matière, qui sont des étapes qui risquent de déformer le support 2. En outre, le support 2 peut être réalisé en métal, par exemple en acier, ou comprendre un matériau polymère. Avantageusement, le perçage par friction à chaud ne nécessite pas d'avoir accès aux deux côtés du support 2. Par ailleurs, lors d'un perçage par friction à chaud, la matière qui est chauffée n'est pas enlevée, mais forme le manchon 21 autour du deuxième orifice. Le manchon 21 s'étend le long de l'axe de rotation A.

La friction à chaud génère une augmentation de la température localement sur l'insert 1, le joint métallique 7 et le support 2, provoquant la soudure de l'insert 1 au support 2. Ceci permet de fournir une soudure homogène de l'insert 1 avec le support 2, car on entretient l'apport de calories procuré par friction jusqu'à la fusion, c'est-à-dire jusqu'à la soudure. En particulier, l'étape de soudure P2 est réalisée pendant la formation du manchon 21. Lors de la soudure P2, on anime la broche 8 en rotation autour de l'axe de rotation A, et on translate la broche 2 selon l'axe de rotation A. La tête conique 10 vient en contact de l'insert 1, plus particulièrement au contact de base 6 de l'insert 1. La rotation de la broche 8 génère des forces de frottement qui augmentent la température de l'insert 1, du joint métallique 7 et du support 2. L'augmentation de la température entraîne la liquéfaction du joint métallique 7 et la soudure de l'insert 1 au support 2.

En outre, on translate la broche 8 selon l'axe de rotation 8 tout en animant la broche 8 en rotation pour percer l'insert 1. Dans ce cas, on conserve une continuité du mouvement tournant pour percer et pour souder. Ainsi on simplifie le procédé puisqu'on n'arrête pas la rotation de la broche 4 pour percer et souder. Ce mode de mise en oeuvre est particulièrement adapté lorsque l'insert 1 et le support 2 sont réalisés avec le même matériau, et plus particulièrement lorsqu'ils sont en métal.

Le manchon 21 comporte une première lèvre 26 provenant de la matière de l'insert 1, plus particulièrement de la base 6, et formée en saillie de la base 6 de l'insert 1. Le manchon 21 comporte une deuxième lèvre 27 provenant de la matière du support 2 et formée en saillie de la surface externe 20 du support 2. En particulier, la deuxième lèvre 27 correspond à la partie interne du manchon 21 et la première lèvre 26 correspond à la partie externe du manchon 21. Les premières lèvres 26, 27 sont formées en direction de l'insert 1. Le manchon 21 comporte également une troisième lèvre 28 opposée aux deux premières lèvres 26, 27, et formée en saillie de la surface interne 29 du support 2.

Pour améliorer la tenue mécanique de l'insert 1 au support 2, le procédé peut en outre comprendre, après l'étape de soudure P2, l'étape de déformation P4, illustrée à la figure 8. La broche 8 comporte un épaulement 30. Lors de l'étape de déformation P4, on prolonge la translation de la broche 8 selon l'axe de rotation A pour que l'épaulement 30 de la broche 8 atteigne les deux premières lèvres 26, 27 du manchon 21. Ainsi, l'épaulement 30 déforme le manchon 21, qui reste souple, en aplatissant le manchon 21. Ceci renforce la tenue mécanique de l'insert 1 sur le support 2. L'épaulement 30 de la broche 8 vient au contact des deux premières lèvres 26, 27 pour les rabattre en créant un pliage liant mécaniquement l'insert 1 au support 2. Le pliage est obtenu en pliant les deux premières lèvres 26, 27 de manière à coincer l'insert 1 entre la surface externe 20 et la deuxième lèvre 26 provenant de la matière du support 2.

Puis on retire la broche 8 de l'insert 1, et on obtient l'insert 1 soudé au support 2. La soudure par friction à chaud permet d'effectuer un assemblage résistant et étanche.

L'étape de préparation P1 du premier mode de mise en oeuvre peut en outre comporter préalablement une étape initiale dans laquelle on forme un orifice au sein du support 2. On peut mettre en oeuvre l'étape initiale de plusieurs façons. Les principales étapes d'un premier mode de mise en oeuvre de l'étape initiale sont illustrées aux figures 9 à 12.
L'étape initiale comporte :
- une fourniture P01 d'une broche 8 munie d'un épaulement 30,
- un perçage P02 par friction à chaud d'un orifice au sein du support 2 en animant la broche 8 à épaulement 30 en rotation autour de l'axe de rotation A et en translatant la broche 8 selon l'axe de rotation A de manière à former, à partir de la matière du support 2, un manchon 21 autour de l'orifice, et
- un aplatissage P03 du manchon 21 par frottement de l'épaulement 30 de la broche 8 sur le manchon 21, pour former une zone aplatie 32.

L'épaulement 30 peut être raccordé au corps 9 de la broche 8 par une surface incurvée pour faciliter la réalisation de la zone aplatie 32 autour de l'orifice. Puis on retire P04 la broche 8 de l'orifice du support 2 afin d'obtenir un support 2 avec une zone aplatie 32. En outre, la zone aplatie 32 offre une surface homogène pour recevoir le joint métallique 7 et est particulièrement adaptée pour faciliter la soudure entre le support 2 et le joint métallique 7. Puis, après l'étape initiale, on peut introduire le deuxième tronçon 13 de l'insert 1 au sein de l'orifice formé au sein du support 2, en plaçant le joint métallique 7 entre l'épaulement 14 et le support 2. Après l'introduction du deuxième tronçon 13 de l'insert 1, on peut réaliser l'étape de soudure P2 définie ci-avant.

L'étape initiale et l'étape de soudure P2 peuvent être réalisées en utilisant deux broches 8 distinctes pour améliorer la flexibilité du procédé, ou en utilisant une même broche 8 pour diminuer le nombre d'outils.

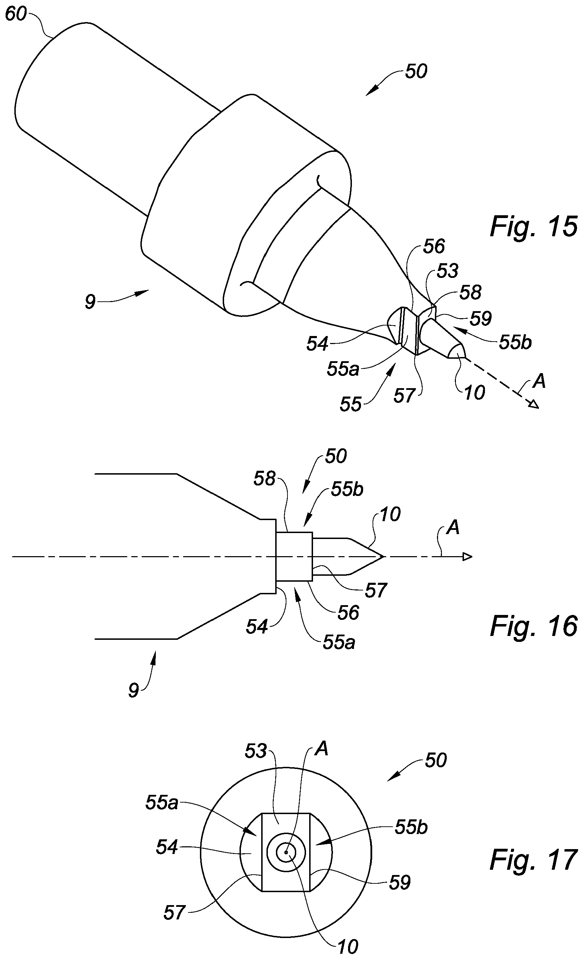

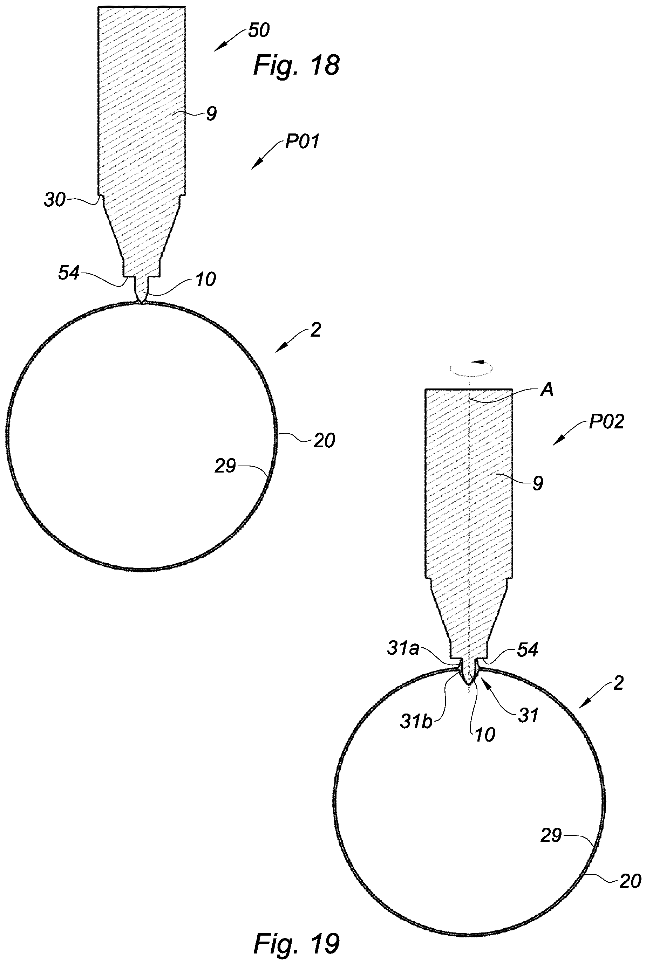

Un deuxième mode de mise en oeuvre de l'étape initiale comporte les principales étapes illustrées aux figures 18 à 21. Selon ce deuxième mode de mise en oeuvre, on utilise une broche de perçage 50 pour former l'orifice au sein du support 2. On a représenté sur les figures 15 à 17 un mode de réalisation d'une broche de perçage 50. La broche de perçage 50 comporte un corps 9 s'étendant selon un axe longitudinal A. Le corps 9 comporte deux épaulements 53, 54 reliés entre eux par une surface 55 ayant au moins une partie plane 55a, 55b. De préférence, la surface 55 comporte deux parties planes 55a, 55b. Chaque épaulement 53, 54 définit une surface. Les surfaces des épaulements 53, 54 sont préférentiellement perpendiculaires à l'axe longitudinal A. En variante, les surfaces des épaulements 53, 54 peuvent être inclinées par rapport à l'axe longitudinal A. Les parties planes 55a, 55b s'étendent, chacune, depuis la surface du premier épaulement 53 jusqu'à celle du deuxième épaulement 54. Par exemple, une partie plane 54a, 55b peut avoir une forme d'un quadrilatère. Par exemple, une partie plane 55a, 55b peut être inclinée par rapport à l'axe longitudinal A. Plus particulièrement, les parties planes 55a, 55b sont parallèle à l'axe longitudinal A. Une première partie plane 55a comporte deux bords 56, 57 formant respectivement deux arêtes. Par ailleurs, la deuxième partie plane 55b comporte deux bords 58, 59 formant respectivement deux arêtes. Les premières arêtes 56, 58, respectivement des première et deuxième parties planes 55a, 55b, peuvent être parallèles à l'axe longitudinal A. Les deuxièmes arêtes 57, 59, respectivement des première et deuxième parties planes 55a, 55b, peuvent être perpendiculaires à l'axe longitudinal A. De préférence, les premières arêtes 56, 58 sont parallèles entre elles et les deuxièmes arêtes 57, 59 sont parallèles entre elles, pour obtenir une broche de perçage 50 symétrique par rapport à son axe longitudinal A afin de faciliter sa réalisation. Plus particulièrement, le corps 9 de la broche de perçage 50 comporte, selon la direction de l'axe longitudinal A, une embase 60 située à une première extrémité de la broche de perçage 50, le deuxième épaulement 54, le premier épaulement 53, et une tête conique 10 située à l'autre extrémité de la broche de perçage 50.

Selon ce deuxième mode de mise en oeuvre, l'étape initiale comporte :
- une fourniture P01 d'une broche de perçage 50,
- un perçage P02 par friction à chaud d'un orifice au sein du support 2 en animant la broche de perçage 50 en rotation autour de l'axe longitudinal A de la broche de perçage 50, et en translatant la broche de perçage 50 selon l'axe longitudinal A de manière à former, à partir de la matière du support 2, un manchon 21 autour de l'orifice, et
- un retrait P05 de matière 62 du manchon 21 par frottement des épaulements 53, 54 de la broche de perçage 50 sur le manchon 21.

La tête conique 10 permet la friction sur le support 2 pour échauffer la matière de ce dernier et générer un refoulement de matière, c'est-à-dire le manchon 21, dont une partie supérieure 31a monte le long du corps 9 de la broche de perçage 50, et une partie inférieure 31b qui suit la tête conique 10, c'est-à-dire qui progresse en translation, vers l'intérieur du support 2.

La mise en rotation et la translation, simultanément, de la broche de perçage 50 impliquent que la partie supérieure 31a du manchon 21 va atteindre la surface du premier épaulement 53. Puis, la progression en translation de la broche de perçage 50 continue, et la partie supérieure 31a va être arasée, c'est-à-dire que des copeaux de matière 62 vont être retirés et le manchon 21 va être amoindri jusqu'à ce que la partie supérieure 31a soit mise au niveau de la surface extérieure du support 2. Le manchon 21 est donc raboté par les arêtes 56 à 59 en formant les copaux 62. En particulier, les arêtes 56 à 59 coupent la partie supérieure 31a du manchon 21 en générant les copeaux 62. En d'autres termes, l'étape de retrait P05 permet d'ôter de la matière 62 du support 2 lors de la formation de l'orifice au sein du support 2. Avantageusement, le retrait P05 de matière 62 limite la formation de lamelles irrégulières sur la partie inférieure 31b du manchon 21. Car lorsqu'on perce par fluoperçage un support 2 à l'aide d'une broche 8 conventionnelle, c'est-à-dire dépourvue des deux épaulements 53, 54 définis ci-avant, l'excédent de matière qui forme le manchon 21 génère un refoulement de matière en excès sur la partie inférieure 31b du manchon 21 et crée les lamelles irrégulières. Un inconvénient de telles lamelles irrégulières est qu'elles peuvent se détacher à l'intérieur du support 2. Ce détachement est préjudiciable car il peut obstruer le support 2, par exemple lorsque ce dernier est un tuyau d'évacuation. Une telle broche de perçage 50 empêche la génération de lamelles irrégulières du côté de la surface interne 22 du support 2.

Puis, après l'étape initiale, on peut introduire le deuxième tronçon 13 de l'insert 1 au sein de l'orifice formé au sein du support 2, en plaçant le joint métallique 7 entre l'épaulement 14 et le support 2. Après l'introduction du deuxième tronçon 13 de l'insert 1, on peut réaliser l'étape de soudure P2 définie ci-avant. La broche de perçage 50 est particulièrement adaptée pour le premier mode de mise en ouvre du procédé d'assemblage. Elle peut également convenir au deuxième mode de mise en oeuvre du procédé d'assemblage.

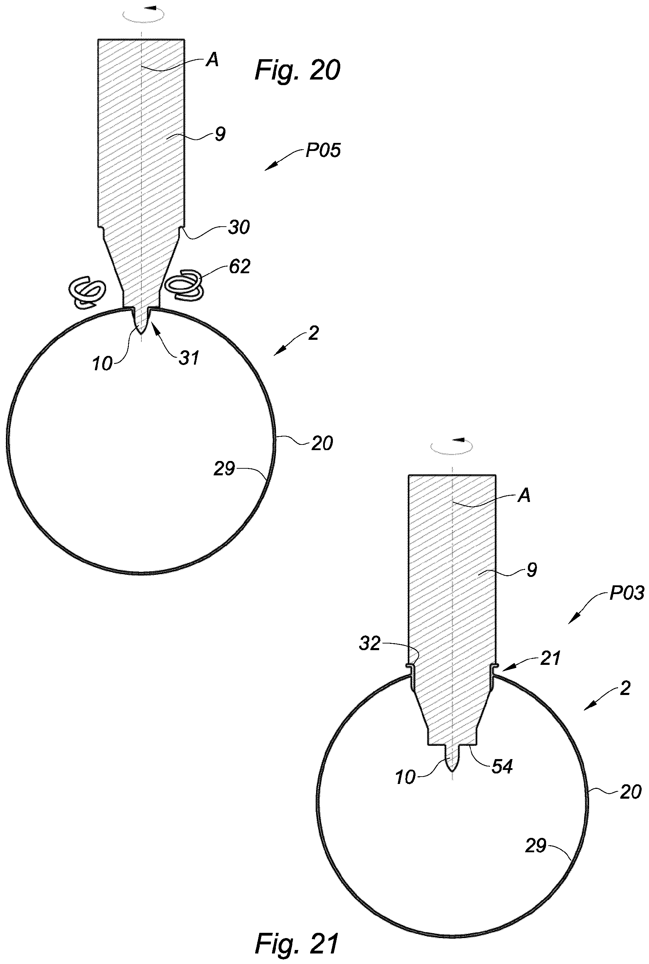

Selon un autre avantage, la broche de perçage 50 peut comprendre un épaulement supplémentaire 30, et on peut alors utiliser la broche de perçage 50 pour réaliser l'orifice au sein du support 2 et la zone aplatie 32 autour de l'orifice du support 2, comme illustré sur la figure 21, et/ou l'étape de déformation P4.

L'étape initiale peut être réalisée en utilisant la broche de perçage 50, et l'étape de soudure P2 peut être réalisée en utilisant une broche 8 distincte de la broche de perçage 50. Avantageusement, on peut utiliser la même broche de perçage 50 pour réaliser l'étape initiale et l'étape de soudure P2 pour diminuer le nombre d'outils.

Le procédé qui vient d'être décrit permet d'assembler un insert, tel un écrou ou une entretoise, sur un support, de préférence un support ayant une paroi mince et sans accessibilité des deux côtés du support, comme un tube ou un réservoir. On peut ainsi assembler des inserts plus résistants que le support.

## Revendications

1. Procédé d'assemblage d'un insert (1) sur un support (2), **caractérisé par** :
- une étape de préparation (P1) dans laquelle on place un joint métallique (7) entre l'insert (1) et le support (2), et
- une étape de soudure (P2) dans laquelle on anime une broche (8) en rotation autour d'un axe de rotation (A) et on place la broche (8) en contact avec l'insert (1) de manière que la broche (8) génère des forces de frottement sur l'insert (1) pour liquéfier le joint métallique (7) et souder l'insert (1) au support (2).

2. Procédé selon la revendication 1, dans lequel l'étape de soudure (P2) comporte une translation de la broche (8) selon l'axe de rotation (A) pour exercer une pression sur l'insert (1) et sur le joint métallique (7).

3. Procédé selon la revendication 1 ou 2, dans lequel, lors de l'étape de soudure (P2), l'insert (1) est bloqué en rotation.

4. Procédé selon l'une des revendications 1 à 3, dans lequel l'insert (1) comprend un premier tronçon (12), un deuxième tronçon (13) adjacent au premier tronçon (12) et un épaulement (14) situé entre les premier et deuxième tronçons (12, 13), et, lors de l'étape de préparation (P1), on forme un orifice au sein du support (2) puis on introduit le deuxième tronçon (13) au sein de l'orifice en plaçant le joint métallique (7) entre l'épaulement (14) et le support (2).

5. Procédé selon la revendication 4, dans lequel les premier et deuxième tronçons (12, 13) sont creux, le deuxième tronçon (13) comporte une surface interne (15) tronconique s'évasant en direction du premier tronçon (12) et, lors de l'étape de soudure (P2), la broche (8) est placée en contact avec la surface interne (15) du deuxième tronçon (12).

6. Procédé selon la revendication 5, comprenant, après l'étape de soudure (P2), une étape de sertissage (P3) de l'insert (1) sur le support (2) dans laquelle on translate la broche (8) selon l'axe de rotation (A) pour écarter le deuxième tronçon (13) radialement par rapport à l'axe de rotation (A).

7. Procédé selon l'une des revendications 4 à 6, dans lequel, lors de l'étape de préparation (P1), le joint métallique (7) est monté autour du deuxième tronçon (13) de l'insert (1).

8. Procédé selon l'une des revendications 4 à 7, dans lequel, on forme l'orifice au sein du support (2) à l'aide d'une broche de perçage (50) comportant un corps (9) muni de deux épaulements (53, 54) reliés entre eux par une surface (55) ayant au moins une partie plane (55a, 55b).

9. Procédé selon l'une des revendications 1 à 3, dans lequel l'insert (1) est borgne et comprend un tronçon (5) et une base (6) adjacente au tronçon (5) et, lors de l'étape de préparation (P1), on place le joint métallique (7) entre la base (6) et le support (2).

10. Procédé selon la revendication 8, dans lequel, lors de l'étape de soudure (P2), on perce par friction à chaud un premier orifice au sein de la base (6) et un deuxième orifice au sein du support (2) en translatant la broche (8) selon l'axe de rotation de manière à former, à partir de la matière de l'insert (1) et du support (2), un manchon (21) autour du deuxième orifice.

11. Procédé selon la revendication 9, dans lequel la broche (8) comporte un épaulement (30) et, après l'étape de soudure (P2), le procédé comporte une étape de déformation (P4) du manchon (21) en translatant la broche (8) selon l'axe de rotation (A) de manière que l'épaulement (30) de la broche (8) exerce une pression sur le manchon (21).

12. Procédé selon l'une des revendications 1 à 10, dans lequel l'insert (1) est une entretoise ou un écrou.

13. Procédé selon l'une des revendications 1 à 11, dans lequel l'insert (1) et le support (2) sont en métal.

14. Procédé selon l'une des revendications 1 à 12, dans lequel le support (2) comporte au moins un matériau polymère.

## Patentansprüche

1. Verfahren zum Montieren eines Einsatzes (1) auf einem Träger (2), **gekennzeichnet durch**:
- einen Vorbereitungsschritt (P1), bei dem eine Metalldichtung (7) zwischen dem Einsatz (1) und dem Träger (2) platziert wird, und
- einen Schweißschritt (P2), bei dem eine Spindel (8) in Drehung um eine Rotationsachse (A) betätigt wird, und die Spindel (8) in Berührung mit dem Einsatz (1) derart platziert wird, dass die Spindel (8) Reibungskräfte auf dem Einsatz (1) erzeugt, um die Metalldichtung (7) zu verflüssigen und den Einsatz (1) an den Träger (2) zu schweißen.

2. Verfahren nach Anspruch 1, wobei der Schweißschritt (P2) eine Verschiebung der Spindel (8) entlang der Rotationsachse (A) umfasst, um einen Druck auf den Einsatz (1) und auf die Metalldichtung (7) auszuüben.

3. Verfahren nach Anspruch 1 oder 2, wobei bei dem Schweißschritt (P2) der Einsatz (1) in Drehung blockiert ist.

4. Verfahren nach einem der Ansprüche 1 bis 3, wobei der Einsatz (1) einen ersten Abschnitt (12) umfasst, einen zweiten Abschnitt (13), der zu dem ersten Abschnitt (12) benachbart ist, und eine Schulter (14), die zwischen dem ersten und zweiten Abschnitt (12, 13) liegt, und bei dem Vorbereitungsschritt (P1) eine Öffnung in dem Inneren des Trägers (2) gebildet wird, dann der zweite Abschnitt (13) in das Innere der Öffnung eingeführt wird, indem die Metalldichtung (7) zwischen der Schulter (14) und dem Träger (2) platziert wird.

5. Verfahren nach Anspruch 4, wobei der erste und der zweite Abschnitt (12, 13) hohl sind, wobei der zweite Abschnitt (13) eine kegelstumpfförmige interne Oberfläche (15) umfasst, die sich in Richtung des ersten Abschnitts (12) aufweitet, und bei dem Schweißschritt (P2) die Spindel (8) mit der internen Oberfläche (15) des zweiten Abschnitts (12) in Berührung platziert wird.

6. Verfahren nach Anspruch 5, das nach dem Schweißschritt (P2) einen Falzschritt (P3) des Einsatzes (1) auf dem Träger (2) umfasst, bei dem die Spindel (8) entlang der Rotationsachse (A) verschoben wird, um den zweiten Abschnitt (13) radial bezüglich der Rotationsachse (A) zu beabstanden.

7. Verfahren nach einem der Ansprüche 4 bis 6, wobei bei dem Vorbereitungsschritt (P1) die Metalldichtung (7) um den zweiten Abschnitt (13) des Einsatzes (1) montiert wird.

8. Verfahren nach einem der Ansprüche 4 bis 7, wobei die Öffnung innerhalb des Trägers (2) mit Hilfe einer Bohrspindel (50) gebildet wird, die einen Körper (9) umfasst, der mit zwei Schultern (53, 54) versehen ist, die miteinander durch eine Oberfläche (55) verbunden sind, die mindestens einen ebenen Teil (55a, 55b) umfasst.

9. Verfahren nach einem der Ansprüche 1 bis 3, wobei der Einsatz (1) blind ist und einen Abschnitt (5) und eine Basis (6), die zu dem Abschnitt (5) benachbart ist, umfasst, und bei dem Vorbereitungsschritt (P1) die Metalldichtung (7) zwischen der Basis (6) und dem Träger (2) platziert wird.

10. Verfahren nach Anspruch 8, wobei bei dem Schweißschritt (P2) durch Warmreibung eine erste Öffnung innerhalb der Basis (6) und eine zweite Öffnung innerhalb des Trägers (2) gebohrt werden, indem die Spindel (8) entlang der Rotationsachse derart verschoben wird, dass ausgehend von dem Material des Einsatzes (1) und des Trägers (2) eine Hülse (21) um die zweite Öffnung gebildet wird.

11. Verfahren nach Anspruch 9, wobei die Spindel (8) einen Ansatz (30) umfasst, und das Verfahren nach dem Schweißschritt (P2) einen Verformungsschritt (P4) der Hülse (21) umfasst, indem die Spindel (8) entlang der Rotationsachse (A) derart verschoben wird, dass die Schulter (30) der Spindel (8) einen Druck auf die Hülse (21) ausübt.

12. Verfahren nach einem der Ansprüche 1 bis 10, wobei der Einsatz (1) ein Abstandhalter oder eine Mutter ist.

13. Verfahren nach einem der Ansprüche 1 bis 11, wobei der Einsatz (1) und der Träger (2) aus Metall bestehen.

14. Verfahren nach einem der Ansprüche 1 bis 12, wobei der Träger (2) mindestens ein Polymermaterial umfasst.

## Claims

1. Method for assembling an insert (1) on a support (2), **characterised by** :
- a preparation step (P1) in which a metal seal (7) is placed between the insert (1) and the support (2), and
- a welding step (P2) in which a pin (8) is made to rotate around an axis of rotation (A) and the pin (8) is placed in contact with the insert (1) so that the pin (8) generates friction forces on the insert (1) to liquefy the metal seal (7) and weld the insert (1) to the support (2).

2. Method according to claim 1, wherein the welding step (P2) comprises a translation of the pin (8) according to the axis of rotation (A) so as to exert a pressure on the insert (1) and on the metal seal (7).

3. Method according to claim 1 or 2, wherein, in the welding step (P2), the insert (1) is prevented from moving in rotation.

4. Method according to one of claims 1 to 3, wherein the insert (1) comprises a first section (12), a second section (13) adjacent to the first section (12) and a shoulder (14) situated between the first and second sections (12, 13) and, in the preparation step (P1), an opening is formed in the support (2) then the second section (13) is inserted in the opening, the metal seal (7) being placed between the shoulder (14) and the support (2).

5. Method according to claim 4, wherein the first and second sections (12, 13) are hollow, the second section (13) comprises an inner surface (15) having the shape of a truncated cone widening in the direction of the first section (12) and, when the welding step (P2) is performed, the pin (8) is placed in contact with the inner surface (15) of the second section (12).

6. Method according to claim 5, comprising, after the welding step (P2), a crimping step (P3) of the insert (1) on the support (2) in which the pin (8) is translated according to the axis of rotation (A) so as to move away the second section (13) radially with respect to the axis of rotation (A).

7. Method according to one of claims 4 to 6, wherein, in the preparation step (P1), the metal seal (7) is mounted around the second section (13) of the insert (1).

8. Method according to one of claims 4 to 7, wherein the opening is formed in the support (2) by means of a drilling pin (50) comprising a body (9) provided with two shoulders (53, 54) joined to one another by a surface (55) having at least one flat part (55a, 55b).

9. Method according to one of claims 1 to 3, wherein the insert (1) is blind and comprises a section (5) and a base (6) adjacent to the section (5) and, in the preparation step (P1), the metal seal (7) is placed between the base (6) and the support (2).

10. Method according to claim 8, wherein, in the welding step (P2), a first opening and a second opening are drilled by hot friction respectively in the base (6) and in the support (2) by translating the pin (8) according to the axis of rotation (A) so as to form a sleeve (21) around the second opening, from the material of the insert (1) and of the support (2).

11. Method according to claim 9, wherein the pin (8) comprises a shoulder (30) and, after the welding step (C2), the method comprises a deformation step (P4) of the sleeve (21) by translating the pin (8) according to the axis of rotation (A) so that the shoulder (30) of the pin (8) exerts a pressure on the sleeve (21).

12. Method according to one of claims 1 to 10, wherein the insert (1) is a spacer or a nut.

13. Method according to one of claims 1 to 11, wherein the insert (1) and the support (2) are made from metal.

14. Method according to one of claims 1 to 12, wherein the support (2) comprises at least one polymer material.
